# EUROPEAN PATENT APPLICATION

(11) **EP 4 086 572 A1**
(43) Date of publication of application: **09.11.2022**
(21) Application number: 21205356.5
(22) Date of filing: 28.10.2021
(51) Int. Cl.: G01C 21/00

(54) **METHOD AND DEVICE FOR ACCESSING MAP DATA AND ELECTRONIC DEVICE**

(30) Priority: 20.07.2021 CN 202110817923
(71) Applicant: Guangzhou Xiaopeng Autopilot Co., Ltd., Guangzhou, Guangdong 510640 (CN)
(72) Inventor: XU, Linkun, Guangzhou (CN); LEI, Ming, Guangzhou (CN); FAN, Shuai, Guangzhou (CN); LU, Yahui, Guangzhou (CN)
(74) Representative: Yip, Matthew Wing Yu

(57) **Abstract**

A method and device for accessing map data and an electronic device are disclosed. The method include: acquiring information of a current tile corresponding to current position information of a vehicle according to the current position information; acquiring information of a preset number of associated tiles adjacent to the current tile according to the information of the current tile; and acquiring road data corresponding to the current tile and the associated tiles to a cache respectively according to the information of the current tile and the information of the associated tiles. In the method of the present disclosure, through limiting the number of and geographical area of the tiles, the acquired road data is limited and the number of generated paths can be further limited to reduce the data processing load on an in-vehicle apparatus and improve the processing efficiency on the in-vehicle apparatus.

## Description

### Field of Invention

The present disclosure relates to the technical field of autonomous driving, and in particular to a method and device for accessing map data and an electronic device.

### Background

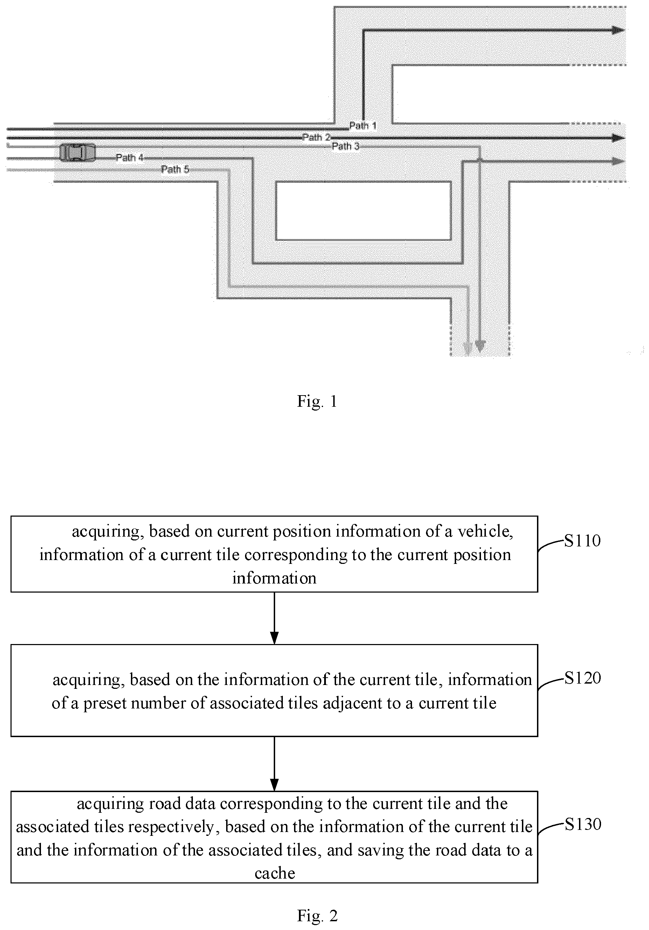

In related technologies, when high-precision maps are used for navigation on an in-vehicle apparatus, an ADASIS (Advanced Driver Assistance Systems Interface Specification) protocol is generally used to acquire road data within a reachable length distance ahead according to current vehicle position. The ADASIS is a communication protocol used for map data transmission. As shown in Fig. 1, based on the ADASIS protocol, different Paths (navigation routes) are generated correspondingly since the road ahead includes different diverging roads, and after an in-vehicle apparatus acquires each Path, data processing is further performed, to generate a final navigation route reaching the destination.

However, many diverging roads exist in cities, and several intersections will be generated every certain length of distance, thereby leading to an explosive increase of the number of Paths, increasing the data processing load on an in-vehicle apparatus and further reducing the processing efficiency of the in-vehicle apparatus.

### Summary of Invention

To overcome the problems in the prior art, the present disclosure provides a method and device for accessing map data and an electronic device, to reduce the data processing load on an in-vehicle apparatus and improve the processing efficiency on the in-vehicle apparatus.

A first aspect of the present disclosure provides a method for accessing map data, including:
acquiring, based on current position information of a vehicle, information of a current tile corresponding to the current position information;
acquiring, based on the information of the current tile, information of a preset number of associated tiles adjacent to the current tile; and
acquiring road data corresponding to the current tile and the associated tiles respectively, based on the information of the current tile and the information of the associated tiles, and saving the road data to a cache.

In one of the embodiments, the information of the current tile includes a current tile ID of the current tile, and/or the information of the associated tiles includes associated tile IDs of the associated tiles.

In one of the embodiments, said acquiring information of a preset number of associated tiles adjacent to the current tile includes:
acquiring information of at least four associated tiles adjacent to the current tile, wherein the associated tiles are located at preset adjacent locations of the current tile on a map.

In one of the embodiments, said acquiring road data corresponding to the current tile and the associated tiles respectively and saving the road data to a cache includes:
storing in advance information of and road data corresponding to tiles at an in-vehicle apparatus or a server; and
receiving and storing to the cache the road data corresponding to the current tile and the associated tiles sent by the in-vehicle apparatus or the server respectively based on the information of the current tile and the information of the associated tiles.

In one of the embodiments, the method further includes:
acquiring information of an updated tile and information of a preset number of associated updated tiles adjacent to the updated tile when the position information of the vehicle is updated; and
acquiring road data corresponding to the updated tile and the associated updated tiles respectively, based on the information of the updated tile and the information of the associated updated tiles, and saving the road data to the cache.

In one of the embodiments, said acquiring information of an updated tile and information of a preset number of associated updated tiles adjacent to the updated tile when the position information of the vehicle is updated includes:
acquiring updated position information of the vehicle at preset intervals;
determining whether information of the updated tile corresponding to the updated position information is the same as the information of the current tile;
determining the information of the updated tile corresponding to the updated position information if the information of the tile corresponding to the updated position information is different from the information of the current tile; and
acquiring the information of the preset number associated updated tiles adjacent to the updated tile based on the information of the updated tile.

In one of the embodiments, said determining the information of the updated tile corresponding to the updated position information if the information of the tile corresponding to the updated position information is different from the information of the current tile includes:
comparing a distance between the updated position of the vehicle and the current tile with a preset distance; and
determining the information of the updated tile if the distance exceeds the preset distance.

In one of the embodiments, the method further includes, after acquiring the information of the preset number of associated updated tiles adjacent to the updated tile based on the information of the updated tile:
when a distance between the updated position of the vehicle and the current tile exceeds a preset distance, deleting the road data corresponding to some of the associated tiles from the cache.

A second aspect of the present disclosure provides a device for accessing map data, including:
a current tile determination module, configured to acquire, based on current position information of a vehicle, information of a current tile corresponding to current position information;
an associated tile determination module, configured to acquire, based on the information of the current tile, information of a preset number of associated tiles adjacent to the current tile; and
a road data acquisition module, configured to acquire road data corresponding to the current tile and the associated tiles, based on the information of the current tile and the information of the associated tiles, and save the road data to a cache.

A third aspect of the present disclosure provides an electronic device, including a processor and memory. The memory has stored thereon executable codes; and the processor is configured to perform the method for accessing map data in any of the above embodiments by executing the executable codes.

A fourth aspect of the present disclosure provides a computer readable storage medium having stored thereon executable codes which, when executed by a processor of an electronic device, cause the processor to perform the method for accessing map data in any of the above embodiments.

In the method for accessing map data in the present disclosure, based on current position information of a vehicle, road data corresponding to a current tile corresponding to current position information and a preset number of associated tiles adjacent to the current tile is acquired. In the invention, through limiting the number of and geographical area of the tiles, the acquired road data is limited and the number of generated paths can thus be limited to reduce data processing load on an in-vehicle apparatus and thus improve the processing efficiency on the in-vehicle apparatus.

It should be understood that the above general description and the later detailed descriptions are merely exemplary and explanatory and do not limit the present disclosure.

### Brief Description of Drawings

The foregoing and other objects, characteristics and advantages of the present disclosure will become more apparent through a more detailed description of the exemplary embodiments of the present disclosure in combination with the accompanying drawings, in which same reference numerals generally represent same parts in the exemplary embodiments of the present disclosure.
Fig. 1 is a schematic diagram of acquiring paths based on an ADASIS protocol in related arts.
Fig. 2 is a flow chart of a method for accessing map data in accordance with an embodiment of the present disclosure;
Fig. 3 is a schematic diagram illustrating a current tile and associated tiles in accordance with an embodiment of the present disclosure;
Fig. 4 is a flow chart of a method for accessing map data in accordance with another embodiment of the present disclosure;
Fig. 5 is a schematic diagram illustrating an updated tile and associated updated tiles in accordance with an embodiment of the present disclosure;
Fig. 6 is a structural schematic diagram of a device for accessing map data in accordance with an embodiment of the present disclosure;
Fig. 7 is another structural schematic diagram of a device for accessing map data in accordance with an embodiment of the present disclosure;
Fig. 8 is a structural schematic diagram of an electronic device in accordance with an embodiment of the present disclosure.

### Detailed Description

Preferred embodiments of the present disclosure will be described in detail below with reference to the accompanying drawings. Although preferred embodiments of the present disclosure are shown in the accompanying drawings, however, it should be understood that the present disclosure can be implemented in various forms and should not be limited by the embodiments set forth herein. On the contrary, these embodiments are provided to make the present disclosure more thorough and complete, and to enable the complete scope of the present disclosure to be communicated to those skilled in the art.

The terms used in the present disclosure are merely intended to describe particular embodiments and are not intended to limit the present disclosure. The singular forms of "a", "said" and "the" as used in the present disclosure and the appended claims are also intended to include plural forms, unless the context clearly indicates otherwise. It should also be understood that the term "and/or" as used herein refers to and includes any or all possible combinations of one or more of the associated listed items.

It should be understood that while the terms "first", "second", "third" and the like may be used in the present disclosure to describe various types of information, however, such information should not be limited to these terms. These terms are merely used to distinguish the same type of information from one another. For example, without departing from the scope of the present disclosure, the first information may also be referred to as the second information, and similarly, the second information may also be referred to as the first information. Therefore, a feature defined with "first" and "second" may explicitly or implicitly include one or more of those features. In the description of the present disclosure, the term "a plurality of' means two or more, unless otherwise expressly and specifically defined.

In related technologies, based on an ADASIS protocol, different paths may be generated accordingly since there are different diverging roads in front of a road. An in-vehicle apparatus acquires each of the paths and then performs further data processing to generate a final navigation route reaching the destination. However, a large number of diverging roads exist in a city and several intersections will be generated every certain length of distance, thereby leading to an explosive increase in the number of paths, increasing the data processing load on the in-vehicle apparatus and thus reducing the processing efficiency of the in-vehicle apparatus.

To address the above problems, embodiments of the present disclosure provide a method and device for accessing map data and an electronic device, to reduce data processing load on an in-vehicle apparatus and improve the processing efficiency on the in-vehicle apparatus.

For better understanding of the solution of the embodiments in the present disclosure, the technical solutions of the embodiments of the present disclosure are described in detail below in combination with the accompanying drawings.

Please refer to Fig. 2 which is a flow chart of a method for accessing map data in accordance with an embodiment of the present disclosure.

As shown in Fig. 2, in the embodiment of the present disclosure, the method for accessing map data includes steps S110 - S130.

Step S110, acquiring, based on current position information of a vehicle, information of a current tile corresponding to the current position information.

In related arts, a Tiling Scheme (tile division) method may be adopted to slice the surface of the earth into numerous tiles. Each tile represents an approximately square area (in fact, the lengths of four sides of each tile are different because the tiles are cut by the same width as the size of latitude and longitude; but the higher the latitude, the shorter the distance represented by the same longitude). For each tile, relevant data including road data in the corresponding geographical range is stored. It can be understood that each tile is mapped to its correspondingly stored road data.

In an embodiment, the current position information of the vehicle may be latitude and longitude coordinates of the current position of the vehicle. The current position information of the vehicle may be obtained through GPS (Global Positioning System). Based on the current position information of the vehicle, the tile corresponding to the current position information can be determined as a current tile corresponding to current position information. That is, the current position information is within the geographical range where the current tile is located. In an embodiment, the information of the current tile includes a current tile ID of the current tile. It can be understood that in order to distinguish various tile, an ID can be assigned to each tile in advance to obtain corresponding tile IDs. Thus, the tiles can be distinguished from each other by their tile IDs.

Step S120, acquiring, based on the information of the current tile, information of a preset number of associated tiles adjacent to a current tile.

After determining the information of the current tile, the information of other tiles associated with the current tile is further acquired, i.e., the information of the associated tiles. In an embodiment, the information of the associated tiles includes associated tile IDs of the associated tiles. By determining the information of the associated tiles, road data of corresponding tiles to be acquired in the subsequent steps is thereby determined. Further, the data processing load on the in-vehicle apparatus is reduced by limiting the number of tiles to be accessed.

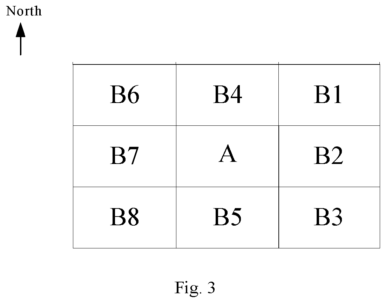

In an embodiment, based on the fact that each tile is a square-like area obtained by dividing the geographic range of the surface of the earth into tiles. The associated tiles may be tiles that are adjacent to the current tile on the geographic range. To facilitate understanding, as shown in Fig. 3, for example, the area where the current tile is located is area A, and the associated tile is one of the areas B1, B2 ......, B8 adjacent to area A. In an embodiment, the preset number of associated tiles may be 4 to 8. For example, the preset number may be 4, 6, or 8. In an embodiment, the associated tiles at preset adjacent locations of the current tile are acquired. With the embodiment, the associated tiles are limited in terms of number and orientation respectively, so as to further make the scope of acquired road data in subsequent steps precise, and thus reduce the data processing load on the in-vehicle apparatus.

Step S130, acquiring road data corresponding to the current tile and the associated tiles respectively, based on the information of the current tile and the information of the associated tiles, and saving the road data to a cache.

Based on the information of the current tile and the information of the associated tiles, the current tile and the associated tiles for which road data are to be acquired can be determined, so that the road data corresponding to the current tile and the associated tiles can be acquired respectively. The acquired road data can be stored to a preset cache for related data processing.

In summary, in the method for accessing map data in the present disclosure, based on current position information of a vehicle, road data corresponding to a current tile corresponding to the current position information and a preset number of associated tiles adjacent to the current tile is acquired. In this way, by limiting the number of and geographical areas of the tiles, the acquired road data can be limited and the number of generated paths can be further limited, to reduce the data processing load on an in-vehicle apparatus and improve the processing efficiency on the in-vehicle apparatus.

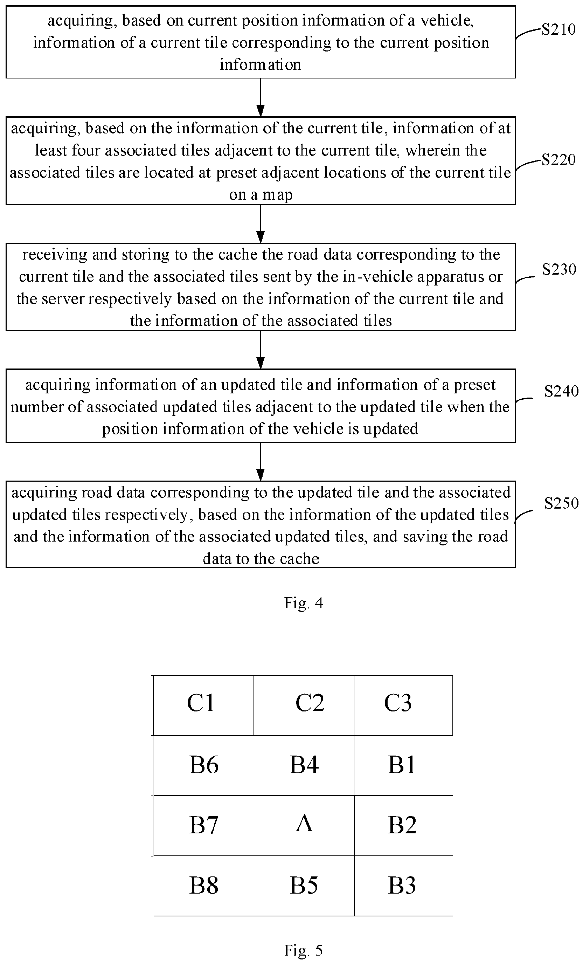

To further introduce the method for accessing map data in the present disclosure, referring to Fig. 4, the method for accessing map data includes steps S210 - S250.

Step S210, acquiring, based on current position information of a vehicle, information of a current tile corresponding to the current position information.

It can be understood that, based on the current position information of a vehicle, the current tile corresponding to the current position information is taken as the center, so that in subsequent steps, tiles adjacent to the center, i.e., associated tiles, are acquired in a radiation manner. In an embodiment, the information of the current tile is the current tile ID of the current tile, and the current tile ID is used to differentiate the current tile from other tiles.

Step S220, acquiring, based on the information of the current tile, information of at least four associated tiles adjacent to the current tile, wherein the associated tiles are located at preset adjacent locations of the current tile on a map.

In order to limit the amount of acquired road data, on the one hand, in an embodiment of the present disclosure, the associated tiles are limited based on the preset adjacent locations, thereby ensuring that the in-vehicle apparatus can subsequently acquire road data in a corresponding adjacent location or locations for navigation path planning. On the other hand, the number of acquired associated tiles is limited through a preset number, to avoid more diverging roads due to acquisition of too many associated tiles, thereby reducing the number of paths.

To facilitate understanding, in a map, the adjacent locations can be preset, which include east, south, west, north, southeast, northeast, southwest, northwest, etc. As shown in Fig. 3, based on the area A corresponding to a current tile, for example, the vehicle is advancing in the direction of north. In the embodiment, the corresponding associated tiles located at four preset adjacent locations such as east, south, west and north of the current tile can be acquired. Through such a design, during traveling of the vehicle in the future, when the driving direction of the vehicle changes, for example, when the vehicle makes a turn or turns around, the road data corresponding to the associated tiles at the adjacent locations can be provided for navigation path planning. Further, in order to avoid acquiring too much road data, in an embodiment, at least one associated tile can be acquired in the corresponding preset adjacent locations respectively. For example, as shown in Fig. 3, four associated tiles corresponding to areas B4, B2, B7 and B5 are acquired respectively. Further, in an embodiment, the associated tiles are seamlessly adjacent to the current tile respectively, i.e., areas B4, B2, B7 and B5 are seamlessly adjacent to area A respectively, thereby avoiding navigation planning errors caused by defaults of road data. In other embodiments, two consecutively adjacent associated tiles can be acquired respectively at corresponding preset adjacent locations, so as to facilitate acquisition of road data for a larger area in advance and facilitate the pre-processing of data on the in-vehicle apparatus. For example, the information of two consecutively adjacent associated tiles in each of the 4 preset adjacent locations, such as east, south, west and north, of the current tile is respectively acquired. That is, the information of a total of 8 associated tiles is acquired. To facilitate understanding, referring to Fig. 5, with north as an example, the information of the associated tiles in areas B4 and C2 in the north of area A is acquired.

Further, in order to ensure navigation path planning in an all-round manner, in an embodiment, information of adjacent associated tiles is obtained in 8 orientations, i.e., adjacent locations, of the current tile, namely, east, south, west, north, southeast, northeast, southwest, and northwest, wherein information of at least 1 associated tile is acquired in each orientation. That is, as shown in Fig. 3, with area A where the current tile is located as a center, the information of eight adjacent associated tiles around the current tile, i.e., the information of eight associated tiles B1, B2, B3, B4, B5, B6, B7, B8, is acquired so as to facilitate responding to path changes of the vehicle traveling in any orientation, to timely provide navigation path planning. In other embodiments, information of two consecutively adjacent associated tiles is acquired in each orientation in a direction far away from the current tile. In the embodiment, the orientation of at least one associated tile is located in the advancing direction of the vehicle. Such embodiments ensure that navigation can be performed timely based on the advancing direction of the vehicle.

Further, in an embodiment, the information of the associated tiles is associated tile IDs of the associated tiles. The associated tile IDs are determined to subsequently determine the road data to be acquired. In an embodiment, the associated tile IDs of the corresponding associated tiles are acquired based on preset adjacent locations and a preset number.

Step S230, receiving and storing in the cache the road data corresponding to the current tile and the associated tiles sent by the in-vehicle apparatus or the server respectively based on the information of the current tile and the information of the associated tiles.

In an embodiment, the in-vehicle apparatus may be an in-vehicle intelligent apparatus or an in-vehicle client. In an embodiment, information of and road data corresponding to tiles are stored in advance on the in-vehicle apparatus or a server. That is to say, after the surface of the earth is divided into numerous tiles by means of the Tiling Scheme method, each tile has corresponding tile information and road data. The information of the tiles and the corresponding road data are stored in the in-vehicle apparatus or the server in advance, so that the in-vehicle apparatus or the server can send corresponding data to the in-vehicle apparatus based on information of a current tile and information of associated tiles. The in-vehicle apparatus receives and stores the corresponding data in a cache.

In other words, a cache is set in advance on the in-vehicle apparatus. In an embodiment, the in-vehicle apparatus stores the road data of all the tiles in advance in a local hard disk, and transmits road data of a current tile and associated tiles from the local hard disk to a cache based on the current tile corresponding to current vehicle position information. Alternatively, in an embodiment, the in-vehicle apparatus sends the current position information to a remote server, and the server sends the road data of the current tile and the associated tiles to the cache of the in-vehicle apparatus.

In this embodiment, unlike continuous acquisition of road data within a reachable length distance ahead of the current vehicle position in related arts, the present disclosure only acquires the road data of the current tile and the adjacent associated tiles around the current tile. In other words, in the related art, in the driving direction of the vehicle, the in-vehicle apparatus generally continuously acquires the road data within a preset length distance ahead, that is, the acquired road data is independent of the tile and is only determined based on the preset length distance ahead. As the vehicle advances, the in-vehicle apparatus generally acquires the road data ahead once per second, resulting in a large amount of redundancy of the information acquired each time and further reducing the processing efficiency of the in-vehicle apparatus. In the present disclosure, only road data of a current tile corresponding to current position information and road data of associated tiles are acquired. In other words, in the present disclosure, the current tile in which the current position of the vehicle is located is taken as a center, the acquisition of the road data of the current tile and the associated tiles is limited, and the road data outside these tiles is excluded to acquire paths, thereby greatly reducing the data processing load, reducing the generation of redundant data, and improving the data processing efficiency of the in-vehicle apparatus.

Step S240, acquiring information of an updated tile and information of a preset number of associated updated tiles adjacent to the updated tile when the position information of the vehicle is updated.

It can be understood that along with the driving of the vehicle, the position information of the vehicle may be updated. In order to update timely the road data in a cache, the relevant information of an updated tile needs to be acquired correspondingly. In an embodiment, the following steps S241 to S244 may be performed.

Step S241, acquiring updated position information of the vehicle at preset intervals.

In order to avoid frequent access to road data on the in-vehicle apparatus, in an embodiment, an interval can be set in advance. The updated position information of the vehicle can be obtained at the preset intervals, so that in subsequent steps, the road data in the cache of the in-vehicle apparatus can be updated at the preset intervals. In an embodiment, the preset interval may be 1 minute to 3 minutes, such as 1 minute, 2 minutes or 3 minutes. In an embodiment, the updated position information of the vehicle, i.e., the updated latitude and longitude coordinates, may be acquired through the GPS.

Step S242, determining whether information of the updated tile corresponding to the updated position information is the same as the information of the current tile.

Based on different geographical areas corresponding to different tiles, when the vehicle is in a different geographical area, based on the updated position information, information of tiles corresponding to the updated position information can be acquired. The information, such as tiles IDs, of the tiles corresponding to the updated position information can be the updated. A comparison is made as to whether the updated tile ID is the same as the current tile ID, so as to determine whether the tiles corresponding to the updated position information of the vehicle are changed. It can be understood that if the IDs of two tiles are the same, it means that the vehicle is still in the area of the current tile and the road data do not need to be updated, and the subsequent steps thus do not need to be performed, so as to reduce data processing load on the in-vehicle apparatus.

Step S243, determining the information of the updated tile corresponding to the updated position information if the information of the tile corresponding to the updated position information is different from the information of the current tile.

In an embodiment, if the information of the tile corresponding to the updated position information, i.e., the updated tile ID, is different from the current tile ID, it means that the vehicle has driven away from the geographic area of the current tile and entered the geographic area of the updated tile. In other words, the updated tile is a different tile from the current tile. To facilitate understanding, as shown in Fig. 5, the vehicle is originally located in area A corresponding to the current tile, and along with driving, the vehicle enters area B4 corresponding to the updated tile. Obviously, the tile ID of area A is different from that of area B4.

To further reduce the data processing load on the in-vehicle apparatus, in an embodiment, the distance between the updated position information of the vehicle and the current tile is compared with a preset distance. If the distance exceeds the preset distance, the information of the updated tile is determined, so that in subsequent steps, the information of the associated updated tiles can be acquired based on the information of the updated tile.

To facilitate understanding, please refer to Figs. 3 and 5 together, after the vehicle has driven into a new geographic area, e.g., after the vehicle enters area B4 of the updated tile from area A of the current tile, the road data corresponding to area B4 has been acquired based on step S230 before the vehicle is not driven out of area B4, and sufficient road data are still available for navigation. In an embodiment, if the vehicle enters area B4 and then does not move, then in this case, updated road data does not need to be continuously acquired. The information of the updated tile associated with the tile thus does not need to be acquired. In an embodiment, if the vehicle continues to drive after entering area B4, the distance between the updated position of the vehicle and the current tile can be compared with the preset distance. That is to say, the distance between the updated position of the vehicle in area B4 and area A is compared with the preset distance. For example, the distance between the updated position and the junction line between area A and area B4 is compared with the preset distance. Alternatively, the distance between the updated position and the center point of area A is compared with the preset distance. Whether the vehicle is far away from area A and deep into area B4 is determined based on the distance. If the distance exceeds the preset distance, it means that the vehicle is far enough from area A and deep enough into area B4, and the vehicle is very likely to drive out of area B4 to enter another area. At this time, the information of the updated tile corresponding to the updated position information is determined. That is, by determining a new center for subsequent centering on the updated tile, information of the updated tile associated with the tile is acquired. In an embodiment, the preset distance may be set based on actual object for comparison. For example, in an embodiment, the length and width of a tile may be 2km∼2.5km respectively, and the preset distance, to be compared with the distance between the updated position information and the center point of the current tile, may be set to 2km to 2.5km. It can be understood that the length and width of a tile is set to about 2.5km respectively, which not only meets the subsequent demand for acquisition of road data, but also does not lead to occupying too much memory of a cache due to too large area of the tile. Moreover, the problem of low efficiency caused by explosive increase of the number of paths and repeated acquisition of information is solved. In an embodiment, the dimension of a tile can be adjusted based on different latitudes and longitudes. According to the spherical nature of the earth, for example, the larger the latitude, the smaller the dimension of the individual tile.

Step S244, acquiring information of the preset number of associated updated tiles adjacent to the updated tile based on the information of the updated tile.

Please refer to Fig. 5, as the vehicle enters area B4 corresponding to the updated tile, the information of the preset number of associated updated tiles adjacent to the updated tile is acquired with area B4 being a center. The information can be the associated updated tile IDs. Please refer to step S220, the information of a preset number of associated updated tiles at preset adjacent locations and/or orientations may be acquired. For example, if the associated updated tiles corresponding to 8 orientations are acquired, the associated updated tiles of area B4 include areas B1, B2, A, B7, B6, C1, C2 and C3. It can be understood that since the road data corresponding to areas B1, B2, A, B7, and B6 have already been stored in the cache when the vehicle is in area A, only the road data corresponding to the associated updated tiles in areas C1, C2, and C3 needs to be acquired at this time, thereby improving data acquisition efficiency and reducing the data processing load.

In order to release the memory of the cache timely, in an embodiment, when the distance between the updated position of the vehicle and the current tile exceeds the preset distance, the road data corresponding to some of associated tiles in the cache is deleted. Through such a design, the situation that the vehicle may turn around and return to the current tile may be coped with. When the vehicle travels far enough and the distance between the vehicle and the current tile exceeds the preset distance, road data of a certain number of associated tiles is deleted, thereby avoiding repeated acquisition of the road data of the associated tiles caused when the vehicle turns around and returns to the current tile. To facilitate understanding, please refer to Fig. 5, if the preset number is 8, when the vehicle drives from area A into area B4, the vehicle takes area B4 as a center, and the road data to be acquired is road data corresponding to areas B1, B2, A, B7, B6, C1, C2 and C3. At this time, areas B8, B5 and B3 cached in step S230 are correspondingly the associated tiles. When the distance between the updated position of the vehicle in area B4 and area A exceeds the preset distance, it means that the vehicle is far enough from area A, and there is a low possibility that the vehicle will turn back to area A, and there is an even lower possibility that the vehicle returns to areas B8, B5 and B3. In this case, the road data with areas B8, B5 and B3 corresponding to the associated tiles can be deleted, thereby reducing occupation of the memory of the cache. In an embodiment, the distance in step S244 can be same as or different from the distance in step S243; the preset distance in step S244 can be set to be the same as or different from the preset distance in step S243. That is, the preset distance in step S244 and the preset distance in step S243 are set independently; and the preset distances in step S244 and in step S243 are set independently without interfering with each other.

Step S250, acquiring road data corresponding to the updated tile and the associated updated tiles respectively, based on the information of the updated tiles and the information of the associated updated tiles, and saving the road data to the cache.

It can be understood that after determining a tile for which road data needs to be acquired, that is, it is determined that the in-vehicle apparatus needs to acquire the corresponding road data from the updated tile and the associated updated tiles respectively, such that road data in the cache meets the demand for the navigation data after the vehicle updates the position information.

It can be understood that, as the vehicle continuously updates the current position information, the in-vehicle apparatus may perform according to the above steps S240 to S250. If the vehicle does not move, i.e., the vehicle does not update the position information, only steps S210 to S230 need to be performed. Through such a design, the cache of the in-vehicle apparatus always takes the tile corresponding to the position information in which the vehicle is located as a center, and only the road data of the tile at the center and the associated tiles adjacent to the center is acquired and saved, thereby reducing the data processing load on the in-vehicle apparatus, reducing the generation of redundant data, and improving the processing efficiency on the in-vehicle apparatus.

Corresponding to the aforementioned method embodiments, the present disclosure further provides a device for accessing map data, an electronic device and corresponding embodiments.

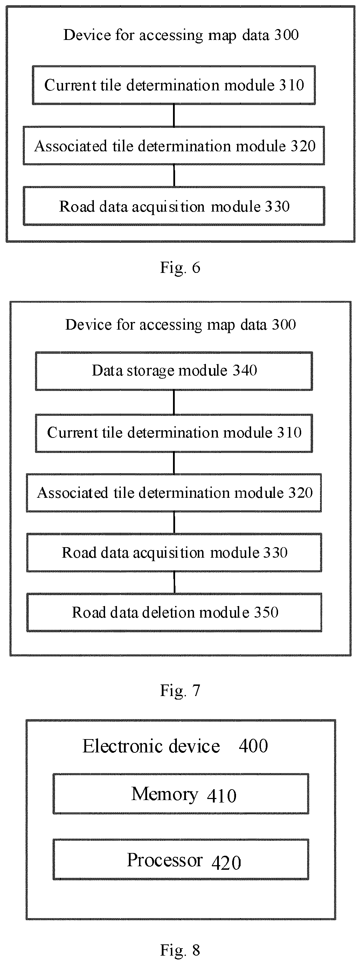

Fig. 6 is a structural schematic diagram of a device for accessing map data in accordance with an embodiment of the present disclosure.

Please refer to Fig. 6, a device 300 for accessing map data in accordance with an embodiment of the present disclosure includes a current tile determination module 310, an associated tile determination module 320 and a road data acquisition module 330.

The current tile determination module 310 is configured to acquire, based on current position information of a vehicle, information of a current tile corresponding to the current position information.

The associated tile determination module 320 is configured to acquire, based on the information of the current tile, information of a preset number of associated tiles adjacent to the current tile.

The road data acquisition module 330 is configured to acquire road data corresponding to the current tile and the associated tiles respectively, based on the information of the current tile and the information of the associated tiles, and save the road data to a cache.

Please refer to Fig. 7, further, in an embodiment, the device 300 for accessing map data in the present disclosure further includes a data storage module 340 configured to store information of and road data corresponding to tiles onto an in-vehicle apparatus or a server in advance. The road data acquisition module 330 receives and stores to the cache the road data corresponding to the current tile and the road data corresponding to the associated tiles sent by the in-vehicle apparatus or the server respectively based on the information of the current tile and the information of the associated tiles. The associated tile determination module 320 is configured to acquire information of at least four associated tiles adjacent to the current tile, wherein the associated tiles are located at a preset adjacent locations of the current tile on a map.

Please refer to Fig. 7, further, in an embodiment, the current tile determination module 310 may also be configured to acquire updated position information of the vehicle at preset intervals; determine whether the information of the updated tile corresponding to the updated position information is the same as the information of the current tile; and if the information of the tile corresponding to the updated position information is different from the information of the current tile, determine the information of the updated tile corresponding to the updated position information. The associated tile determination module 320 may also be configured to acquire information of the preset number of associated updated tiles adjacent to the updated tile based on the information of the updated tile.

The device 300 for accessing map data of the present disclosure further includes a road data deletion module 350 configured to delete road data corresponding to some of the associated tiles from the cache when the distance between the updated position of the vehicle and the current tile exceeds a preset distance.

In summary, the device 300 for accessing map data in the present disclosure determines information of the current tile through the current tile determination module 310, so that the associated tile determination module determines the information of the associated tiles, and further the road data acquisition module acquires the road data corresponding to the current tile and the associated tiles to a cache. Through such a design, the current tile at which the vehicle is located is always the center, the road data of the current tile and of the preset number of adjacent associated tiles is acquired. By limiting the number of and geographical area of tiles, the number of generated paths can be further limited to reduce the data processing load on the in-vehicle apparatus and improve the processing efficiency on the in-vehicle apparatus.

As to the device in the above embodiment, the specific manner in which each module performs operations has been described in detail in connection with the method embodiments, and will not be described in detail herein.

As shown in Fig. 8, the electronic device 400 includes memory 410 and a processor 420.

The processor 420 may be a central processing unit (CPU), and may also be other general-purpose processors, digital signal processors (DSPs), application specific integrated circuits (ASICs), field-programmable gate arrays (FPGAs) or other programmable logic devices, discrete gates or transistor logic devices, discrete hardware components, etc. The general-purpose processor may be a microprocessor or the processor may also be any conventional processor, etc.

The memory 410 may include various types of storage units, such as system memories, read-only memories (ROMs), and permanent storage devices. The ROM may store static data or instructions needed by the processor 420 or other modules of a computer. The permanent storage device may be a read-write storage device. The permanent storage device may be a non-volatile storage device that does not lose stored instructions and data even after the computer is powered off. In some embodiments, the permanent storage device adopts a mass storage device (e.g., magnetic or optical disk, flash memory) as a permanent storage device. In some other embodiments, the permanent storage device may be a removable storage device (e.g., floppy disk, optical drive). The system memory may be a read-write storage device or a volatile read-write storage device, such as a dynamic random access memory. The system memory may store some or all of the instructions and data needed by the processor during operation. In addition, the memory 410 may include any combination of computer-readable storage media, including various types of semiconductor memory chips (DRAM, SRAM, SDRAM, flash memory, programmable read-only memory), and disks and/or optical disks may also be adopted. In some embodiments, the memory 410 may include removable storage devices that can read and/or write, such as laserdiscs (CDs), read-only digital versatile discs (e.g., DVD-ROMs, dual-layer DVD-ROMs), read-only Blu-ray discs, ultra-dense discs, flash memory cards (e.g., SD cards, min SD cards, micro-SD cards, etc.), magnetic floppies and the like. The computer readable storage media do not contain carriers and instantaneous electronic signals transmitted in a wireless or wired manner.

Executable codes are stored on the memory 410. When the executable codes are processed by the processor 420, the processor 420 may perform part or all of the method mentioned above.

The solutions of the present disclosure have been described in detail above with reference to the accompanying drawings. In the above embodiments, the description of each embodiment has its own focus, and for the parts that are not described in detail in a certain embodiment, please refer to the relevant descriptions of other embodiments. Those skilled in the art should also be aware that the actions and modules involved in the specification are not necessarily necessary for the present disclosure. Furthermore, it can be understood that the steps in the method in the embodiment of the present disclosure can be adjusted in sequence, combined and deleted according to actual needs, and the modules in the device in the embodiment of the present disclosure can be combined, divided and deleted according to actual needs.

In addition, the method according to the present disclosure may also be implemented as a computer program or a computer program product, and the computer program or the computer program product includes computer program code instructions for performing some or all of the steps in the above method of the present disclosure.

Alternatively, the present disclosure may also be implemented as a computer-readable storage medium (or computer-readable storage medium, or machine-readable storage medium) having executable codes (or computer programs, or computer instruction codes) stored thereon, when the executable codes (or computer programs, or computer instruction codes) are executed by a processor of an electronic device (or electronic device, server, etc.), the processor is enabled to perform some or all of the various steps of the above method according to the present disclosure.

Those skilled in the art should also understand that various exemplary logic blocks, modules, circuits, and algorithmic steps described in combination with the applications herein may be implemented as electronic hardware, computer software, or a combination of the two.

The flow charts and block diagrams in the accompanying drawings show possibly implemented architecture, function and operation of the systems and methods according to a plurality of embodiments of the present disclosure. At this point, each box in the flow chart or block diagram may represent a module, a program segment, or a portion of a code, the module, program segment, or portion of a code contains one or more executable instructions for implementing a specified logical function. It should also be noted that, in some implementations as substitutions, the functions marked in the boxes may also occur in an order different from that marked in the accompanying drawings. For example, two consecutive boxes can actually be executed substantially in parallel, and they can sometimes be executed in opposite orders, depending on the functions involved. It should also be noted that each box in the block diagram and/or flow chart, and the combination of boxes in the block diagram and/or flow chart may be implemented with a dedicated hardware-based system that performs the specified function or operation, or may be implemented with a combination of dedicated hardware and computer instructions.

Embodiments of the present disclosure have been described above, and the above description is exemplary, rather than exhaustive, and is not limited to the disclosed embodiments. Without departing from the scope and spirit of the illustrated embodiments, many modifications and changes will be apparent to those skilled in the art. The terms used herein have been selected to best explain the principles, practical applications, or improvements to the technology in the marketplace of each embodiment, or to enable others of ordinary skills in the art to understand each embodiment disclosed herein.

## Claims

1. A method for accessing map data, **characterized by**:
acquiring, based on current position information of a vehicle, information of a current tile corresponding to the current position information;
acquiring, based on the information of the current tile, information of a preset number of associated tiles adjacent to the current tile; and
acquiring road data corresponding to the current tile and the associated tiles respectively, based on the information of the current tile and the information of the associated tiles, and saving the road data in a cache.

2. The method of claim 1, wherein the information of the current tile comprises a current tile ID of the current tile, and/or the information of the associated tiles comprises associated tile IDs of the associated tiles.

3. The method of claim 1, wherein said acquiring information of a preset number of associated tiles adjacent to the current tile comprises:
acquiring information of at least four associated tiles adjacent to the current tile, wherein the associated tiles are located at preset adjacent locations and/or orientations with respect to the current tile on a map.

4. The method of claim 1, wherein said acquiring road data corresponding to the current tile and the associated tiles respectively and saving the road data to a cache comprises:
storing in advance information of and road data corresponding to tiles at an in-vehicle apparatus or a server; and
receiving and storing in the cache the road data corresponding to the current tile and the associated tiles sent by the in-vehicle apparatus or the server respectively based on the information of the current tile and the information of the associated tiles.

5. The method of claim 1, further comprising:
acquiring information of an updated tile and information of a preset number of associated updated tiles adjacent to the updated tile when the position information of the vehicle is updated; and
acquiring road data corresponding to the updated tile and the associated updated tiles respectively, based on the information of the updated tile and the information of the associated updated tiles, and saving the road data in the cache.

6. The method of claim 5, wherein said acquiring information of an updated tile and information of a preset number of associated updated tiles adjacent to the updated tile when the position information of the vehicle is updated comprises:
acquiring updated position information of the vehicle at preset intervals;
determining whether information of the updated tile corresponding to the updated position information is the same as the information of the current tile;
determining the information of the updated tile corresponding to the updated position information if the information of the tile corresponding to the updated position information is different from the information of the current tile; and
acquiring the information of the preset number of associated updated tiles adjacent to the updated tile based on the information of the updated tile.

7. The method of claim 6, wherein said determining the information of the updated tile corresponding to the updated position information if the information of the tile corresponding to the updated position information is different from the information of the current tile comprises:
comparing a distance between the updated position of the vehicle and the current tile with a preset distance; and
determining the information of the updated tile if the distance exceeds the preset distance.

8. The method of claim 6, further comprising, after acquiring the information of the preset number of associated updated tiles adjacent to the updated tile based on the information of the updated tile:
when a distance between the updated position of the vehicle and the current tile exceeds a preset distance, deleting road data corresponding to some of the associated tiles from the cache.

9. A device for accessing map data, **characterized by**:
a current tile determination module, configured to acquire, based on current position information of a vehicle, information of a current tile corresponding to current position information;
an associated tile determination module, configured to acquire, based on the information of the current tile, information of a preset number of associated tiles adjacent to the current tile; and
a road data acquisition module, configured to acquire road data corresponding to the current tile and the associated tiles, based on the information of the current tile and the information of the associated tiles, and save the road data to a cache.

10. The device of claim 9, wherein said an associated tile determination module is further configured to acquire information of at least four associated tiles adjacent to the current tile, wherein the associated tiles are located at preset adjacent locations and/or orientations with respect to the current tile on a map.

11. The device of claim 9, wherein said road data acquisition module is further configured to:
store in advance information of and road data corresponding to tiles at an in-vehicle apparatus or a server; and
receive and store in the cache the road data corresponding to the current tile and the associated tiles sent by the in-vehicle apparatus or the server respectively based on the information of the current tile and the information of the associated tiles.

12. The device of claim 9, further comprising:
means for acquiring information of an updated tile and information of a preset number of associated updated tiles adjacent to the updated tile when the position information of the vehicle is updated; and
means for acquiring road data corresponding to the updated tile and the associated updated tiles respectively, based on the information of the updated tile and the information of the associated updated tiles, and saving the road data in the cache.

13. The device of claim 12, wherein said means for acquiring information of an updated tile and information of a preset number of associated updated tiles adjacent to the updated tile when the position information of the vehicle is updated comprises:
means for acquiring updated position information of the vehicle at preset intervals;
means for determining whether information of the updated tile corresponding to the updated position information is the same as the information of the current tile;
means for determining the information of the updated tile corresponding to the updated position information if the information of the tile corresponding to the updated position information is different from the information of the current tile; and
means for acquiring the information of the preset number of associated updated tiles adjacent to the updated tile based on the information of the updated tile.

14. The device of claim 13, wherein said means for determining the information of the updated tile corresponding to the updated position information if the information of the tile corresponding to the updated position information is different from the information of the current tile comprises:
means for comparing a distance between the updated position of the vehicle and the current tile with a preset distance; and
means for determining the information of the updated tile if the distance exceeds the preset distance.

15. An electronic device, comprising:
a processor; and
memory having stored thereupon executable codes which, when executed by the processor, cause the processor to perform the method of any one of claims 1-8.
